# EUROPEAN PATENT SPECIFICATION

(11) **EP 2 339 209 B1**
(45) Date of publication and mention of the grant of the patent: **06.06.2012**
(21) Application number: 10466035.2
(22) Date of filing: 17.12.2010
(51) Int. Cl.: F16H 3/10

(54) **Automatic transmission**
Automatikgetriebe
Transmission automatique

(30) Priority: 22.12.2009 CZ 20090871
(43) Date of publication of application: 29.06.2011
(73) Proprietor: Stastny, Ladislav, 403 40 Usti nad Labem (CZ)
(72) Inventor: Stastny, Ladislav, 403 40 Usti nad Labem (CZ)

(56) References cited:
- EP-A1- 0 688 974
- CH-A- 144 380
- US-A- 2 825 235

## Description

### Technical

The invention is related to the automatic gearbox which serves to transmission of torque and smooth change of gear ratio between e.g. the engine and the driven wheel of the car, including automatic driveaway, for delivering power to various machines and equipment, including automatic startup.

### Present status of technology

Gearboxes with manual selection of gears are currently used for transmission of torque and change of gear in cars and motorcycles. These gearboxes benefit from easier design and manufacturing, lower weight, and relatively low manufacturing costs that are based on the number of units being produced. However, the disadvantage of this type of transmission is the necessity of using a clutch both for driveaway and selection of gears. The procedure of gear change leads to time lapse, loss of power and loss of the optimum operation mode of the power plant. Some vehicles use assisted gearboxes the basic design of which is identical to the manual gearbox; however, in order to achieve a greater comfort of driving, the driveaway and gear selection procedures are governed by electric, hydraulic, or pneumatic circuits, or by a combination of these.

Another, rather widespread, type of transmission are automatic planetary gearboxes with a hydrodynamic clutch or a torque converter. The benefit of these transmissions is the high comfort of driving, especially in the driveaway and gear selection stages. The disadvantage of this transmission design is the high degree of complexity and a higher manufacturing cost. On the other hand, it is to be noted that there exist solutions of automatic transmission systems in the world which change the gear via automatic starting clutches that are actively connected to the individual gears; however, they use a different principle.

CH 144 380 A discloses a transmission comprising a primary shaft whose gear wheels engage corresponding gear wheels on an output shaft; each gear wheel on the primary shaft is mounted idle and can be engaged with the shaft via a corresponding clutch; each gear wheel on the output shaft is mounted thereon via a freewheel. The transmission allows to shift from a lower speed to a higher speed without disengaging the clutch of the lower speed. EP 0 688 974 A discloses an automatic transmission including clutches disposed in series with respective gear trains between input and output shafts, and a one-way clutch disposed in series with each of the gear trains except the smallest gear ratio. A control effects simultaneous slipping of the selected clutches to automatically shift as the vehicle speed increases.

### Invention Rationale

The rationale of the invention of the geared *automatic transmission* is an effective arrangement of the automatic starting clutches of a specific type and their mutual effective connection with individual gears and with one another; the number of such effective connections corresponds to the number of gears in the gearbox. The number of gears only depends on the individual solution and the requirements of the application. A distinguishing property of the individual starting clutches is that as the speed of their input shafts rises, the torque in their output shafts increases correspondingly. This leads to engagement of the clutch, making the clutch automatic.

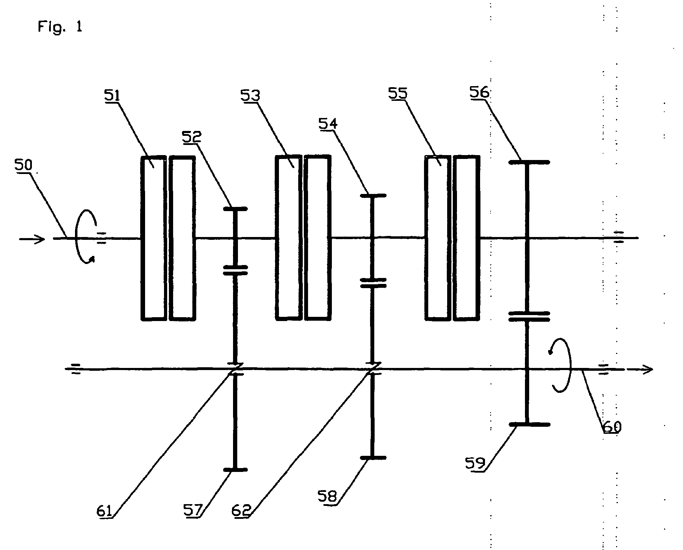

The output of each individual starting clutch is permanently connected to the primary wheel of the gear; each pair of the primary and secondary wheel represents the gear in question. The secondary wheels of individual gears, except for the wheel of the highest gear, are fitted with a freewheel at the output shaft of the transmission box to provide for freedom of the increasing speed of the output shaft while shifting towards a higher gear. The ratio of the gears is haphazard, depending on the design requirements of the transmission unit in question. The starting clutches and primary wheels of individual gears are always functionally connected so that the output of the first starting clutch is permanently connected to the primary wheel of the first gear; the primary wheel of the first gear is permanently connected to the input shaft of the second starting clutch. The output of the second starting clutch is permanently connected to the primary wheel of the second gear; the primary wheel of the second gear is permanently connected to the input shaft of the third starting clutch. The output of the third starting clutch is permanently connected to the primary wheel of the third gear. This very manner of connection is used for all starting clutches of the transmission box to any potential corresponding higher gears of the transmission. The last starting clutch in the series serves the highest gear of the transmission box (see Fig. 1). Therefore, individual starting clutches serve the purpose of transmitting specific torque via the corresponding gear to the output shaft of the transmission box. Each of the starting clutches of the transmission box is therefore effectively connected to a specific gear and is for that purpose dimensioned together with that gear; the first starting clutch only acts when the vehicle starts moving in the first gear. Therefore, all the starting clutches in the transmission box may be of identical design in terms of the torque to be transmitted. In this case, torque at the transmission output shaft changes only by the function of individual gears.
The function of the *automatic transmission* is as follows: The increasing speed at the input shaft of the transmission, i.e. at the input of the first starting clutch, lead to gradual increase of torque at the output shaft of the first starting clutch. The output of the first starting clutch is mechanically connected to the wheel of the first gear (via the primary wheel of the first gear) and to the input shaft of the second starting clutch.

As the transmission box input shaft rotates and the required speed is achieved, torque is transmitted from the starting clutch of the first gear via the wheels of the first gear to the transmission box output shaft (vehicle motion starts, the system engages in motion) as well as to the input shaft of the second starting clutch which is mechanically connected to the primary wheel of the first gear. As the torque in the transmission box output shaft declines during acceleration of the vehicle, the clutch of the first gear engages. At the same time, the second starting clutch with the second gear is continuously engaging; however, its input speed is lower than that of the first starting clutch because the input shaft of the second starting clutch is still beginning to rotate by the primary wheel of the first gear while the vehicle is driving away, for example. Once the first starting clutch has engaged and after the torque in the output shaft of the transmission has been reduced further by continuing acceleration of the transmission output shaft, the same procedure occurs in engaging the second starting clutch with the second gear. The relationships between neighbouring starting clutches of the higher gears (e.g. between gear 2 and 3, gear 3 and 4, etc.) are similar to those between the first and second starting clutches of the first and second gears. The clutches with the higher gear, when not engaged, have lower starting speeds than the clutch with the lower gear. At the same time, when these clutches are beginning to rotate, they do not face the full spectrum of resistance by the output shaft that would exist in starting from zero rotation of the output shaft. Therefore, the effect of torque is not limited by the starting clutch of the higher gear because the starting clutch, in speeds lower than the automatic engagement level, does not transmit the full range of torque. The design of the transmission box responds to changes in torque in both the input and output transmission shafts. When a certain starting clutch is engaged, the starting clutches with lower gear are engaged but they are not directly coupled with the transmission output shaft: this function is provided by freewheels between individual secondary wheels and the output shaft. When torque in the transmission output shaft rises, the output shaft slows down automatically; this results in interruption of engagement of the starting clutch which, in spite of its corresponding gear, is unable to withhold the torque being transmitted to send it to the starting clutch the torque transmission and corresponding gear of which corresponds to the torque load at the transmission output shaft. This down shift operation occurs during a very short period of time as all the starting clutches with lower gear have been engaged by the clutch currently acting. The shift down operation may also be controlled via the accelerator pedal (by abrupt closing and opening the throttle) of the vehicle which results in steep increment of torque at the transmission input shaft. The transmission removes some of the disadvantages of the transmissions mentioned above, such as the complexity, high cost, and application of controlling circuits. A disadvantage of this transmission design is its higher weight as each gear is fitted with a proprietary starting clutch. However, considering the simplicity, reliability, and reduction of weight in related equipment, the stated higher weight does not seem to be an issue.

### List of figures in the drawings

Fig. 19 brings a simplified view of the solution of the automatic transmission with automatic starting clutches

### Examples of Invention Implementation

The automatic transmission in the example presented has three gears and consists of automatic starting clutches 51, 53, 55, primary wheels 52, 54, 56 and secondary wheels 57, 58, 59 of the individual gears on the input shaft 50, output shaft 60, and freewheels 61, 62. Transmission input shaft 50 is mechanically connected to input of starting clutch 51 of the first gear. The output of the first starting clutch 51 is permanently connected to primary wheel 52 of the first gear and to the input shaft 53 of the second starting clutch. The output of the second starting clutch 53 is permanently connected to primary wheel 54 of the second gear and to the input shaft 55 of the third starting clutch. The output of the third starting clutch 55 is permanently connected to the primary wheel 56 of the third gear. Freewheels 61 and 62 are inserted between the output shaft 60 and the secondary wheels 57 58 of the individual gears. Secondary wheel 59 of the highest gear is mechanically and permanently attached to output shaft 60.

### Application in Industry

The invention may be applied as an automatic transmission box with gears which serves for transmission of torque and smooth change of gear between the engine and the driven wheels of the car, for delivering power to various machines and equipment, including their automatic startup. Reverse operation of transmission may be, while considering a specific application, addressed by any of the current solutions of the technology.

### List of Item Marks

- 50 -: Input shaft
- 51 -: Automatic starting clutch
- 52 -: Primary wheel
- 53 -: Automatic starting clutch
- 54 -: Primary wheel
- 55 -: Automatic starting clutch
- 56 -: Primary wheel
- 57 -: Secondary wheel
- 58 -: Secondary wheel
- 59 -: Secondary wheel
- 60 -: Output shaft
- 61 -: Freewheel
- 62 -: Freewheel

## Claims

1. Automatic transmission consisting of the transmission input shaft (50), automatic starting clutches (51, 53, 55), freewheels (61, 62), primary wheels (52, 54, 56), and secondary wheels (57, 58, 59), which represent the individual gears, as well as the transmission output shaft (60); said transmission is specific in having the transmission input shaft (50) mechanically and permanently connected with the input of the first automatic starting clutch (51); the first automatic starting clutch (51) is at the output mechanically and permanently connected with the primary wheel of the first gear; there is an automatic starting clutch (53, 55) between each pair of primary wheels of the following gears; the input of this clutch is mechanically and permanently connected to the primary wheel (52, 54) of the lower of the gears while its output is connected to the primary wheel (54, 56) of the higher of the gears; the secondary gears (57, 58, 59) of the individual gears are installed jointly on the output shaft (60) while each of the secondary wheels (57, 58) — except for the secondary wheel (59) of the highest gear — is fitted with a freewheel (61, 62) to provide free rotation of the output shaft (60) relative to the secondary wheels (57, 58) in the direction of rotation of the output shaft (60), and the secondary wheel (59) of the highest gear is attached mechanically and permanently to the output shaft (60).

## Patentansprüche

1. Das Automatikgetriebe - bestehend aus einer Eingangswelle (Antriebswelle; 50), automatischen Anlaufkupplungen (51, 53, 55), Freiläufen (61, 62), Primärrädern (52, 54, 56) und Sekundärrädern (57, 58, 59), die zusammen die einzelnen Geschwindigkeitsstufen bilden, und einer Ausgangswelle (angetriebene Welle; 60); dieses Getriebe **zeichnet sich dadurch aus**, dass die Eingangswelle (50) des Getriebes mechanisch fest mit dem Eingang der ersten automatischen Anfahrkupplung (51) verbunden ist; die erste automatische Anfahrkupplung (51) an ihrem Ausgang mit dem Primärrand der ersten Geschwindigkeitsstufe (52) fest verbunden ist und zwischen jedem Paar der Primärräder der sich folgenden Geschwindigkeitsstufen sich jeweils eine automatische Anfahrkupplung (53, 55) befindet, die jeweils am Eingang fest mit dem Primärrad (52, 54) der jeweils niedrigeren Geschwindigkeitsstufe und am Ausgang jeweils mit dem Primärrad (52, 54) der jeweils höheren Geschwindigkeitsstufe verbunden ist; und die Sekundärräder (57, 58, 59) der jeweiligen Geschwindigkeitsstufen sich an der Ausgangswelle (angetriebene Welle; 60) befinden, wobei jedes Sekundärrad (57, 58) außer dem Sekundärrad der höchsten Geschwindigkeitsstufe (59) mit einem Freilauf (61, 62) versehen ist, um freies Drehen der Ausgangswelle (angetriebene Welle; 60) gegenüber den Sekundärrädern (57, 58) in der Drehrichtung der Ausgangswelle (angetriebene Welle; 60) zu sichern und das Sekundärrad (59) der höchsten Geschwindigkeitsstufe mechanisch fest mit der Ausgangswelle (angetriebene Welle; 60) verbunden ist.

## Revendications

1. Boîte de vitesses automatique composée d'un arbre primaire (50), d'embrayages automatiques de démarrage (51, 53, 55), de liaisons pivots (61, 62), de pignons de vitesse (52, 54, 56) et de pignons fous (57, 58, 59), qui forment les différents rapports de vitesse, et d'un arbre secondaire (60). Cette boîte de vitesses est **caractérisée par** l'arbre primaire (50) qui est relié de manière fixe avec l'entrée du premier embrayage automatique de démarrage (51). La sortie du premier embrayage automatique de démarrage (51) est reliée de manière fixe avec le pignon de vitesse (52) du premier rapport. Un embrayage automatique de démarrage (53, 55) est ensuite intégré entre chaque pignon de vitesse. L'entrée de chacun de ces embrayages est reliée de manière fixe avec le pignon de vitesse du rapport inférieur (52, 54), alors que sa sortie est reliée avec le pignon de vitesse du rapport supérieur (54, 56). Tous les pignons fous (57, 58, 59) des différents rapports sont montés sur l'arbre secondaire (60). Chacun d'entre eux (57, 58), à l'exception du pignon du rapport le plus rapide (59), est en liaison pivot (61, 62) avec l'arbre secondaire pour assurer la rotation libre de cet arbre (60) par rapport aux pignons fous (57, 58). Cette rotation libre se fait dans le même sens que celle de l'arbre secondaire (60). Le pignon (59) du rapport le plus rapide est mécaniquement solidarisé avec l'arbre secondaire (60).
